# EUROPEAN PATENT SPECIFICATION

(11) **EP 0 923 857 B1**
(45) Date of publication and mention of the grant of the patent: **24.04.2002**
(21) Application number: 98203933.1
(22) Date of filing: 20.11.1998
(51) Int. Cl.: A01K 1/015

(54) **Pen floor for livestock pens, for pigsties in particular, including floor panel and transverse beam to be incorporated in the pen floor**
Stallfussboden für Viehställe, insbesondere Schweineställe, sowie Fussbodenpaneel und Querträger zur Anwendung im Stallfussboden
Caillebotis pour étables pour animaux, particulièrement pour porcheries, ainsi que panneau de caillebotis et traverse pouvant être incorporés dans ce caillebotis

(30) Priority: 15.12.1997 NL 1007790
(43) Date of publication of application: 23.06.1999
(73) Proprietor: Swaans, Johannes Hermanus C. H., 5591 PW Heeze (NL)
(72) Inventor: Swaans, Johannes Hermanus C. H., 5591 PW Heeze (NL)
(74) Representative: Verhees, Godefridus Josephus Maria

(56) References cited:
- EP-A- 0 566 444
- AT-B- 349 822
- FR-A- 2 092 767
- FR-A- 2 300 501
- US-A- 3 800 491

## Description

### BACKGROUND OF THE INVENTION:

### Field of the invention

The invention relates to a pen floor for livestock pens, for pigsties in particular, comprising transverse beams which, following installation of the pen floor in a pen, rest upon supports interspaced throughout the pen and bridge the space between one support and the next, whereby the pen floor also comprises floor panels whose edges rest upon the transverse beams. Livestock pens often have a manure cellar containing supports, for example, in the form of the cellar walls. Transverse beams are attached to these supports to bear the floor panels, which are placed edge-to-edge to form the pen floor together with the transverse beams. It should be noted that the supports are not part of the pen floor.

### Prior art

A similar pen floor is well-known from the French patent application FR 2.300.501 A. However, the ends of the transverse beams in this known pen floor extend into recesses in the cellar walls of the pen. Consequently, the dimensions ofthe transverse beams and floor panels must be taken into account during construction of the pen to ensure that the recesses are correctly situated in the cellar walls and that they have the right dimensions, otherwise recesses must be cut in the cellar walls following construction of the pen. pen. Moreover, if the pen layout is altered later, using transverse beams and/or floor panels of different dimensions, new recesses have to be cut in the cellar walls.

### Summary of the invention

One of the objectives of the invention is to introduce a pen floor type, as described in the preamble, which can be more easily installed. The pen floor according to the invention is characterized in that the ends of the transverse beams contain recesses, which run along the entire width, whereby, following installation of the pen floor in a pen, the transverse beams at the location of the recesses rest upon supports. As the supports are not recessed and the transverse beams rest upon the supports, installation of the pen floor according to the invention becomes a much simpler process.

One embodiment of the pen floor according to the invention is characterized in that the floor panels are made of gravel or synthetic-resin concrete. Concrete types are known which are stronger than the concrete types usually used for this application. These strong concrete types can also be used to produce lightweight floor panels. However, these strong concrete types also have their drawbacks, e.g. they are expensive. The construction according to the invention enables the use of gravel or synthetic-resin concrete to produce sufficiently strong and light floor panels. Gravel or synthetic-resin concrete is also the preferred material for the manufacture of the transverse beams.

Thanks to the recesses in the transverse beams, the thickness of the pen floor that protrudes above the supports is limited. Moreover, in another embodiment, the composite thickness of a transverse beam end and a floor panel edge is approximately equal to that of conventional or traditional pen floors, thereby avoiding the additional high costs of structural modifications when installing a new pen floor. The preferred composite thickness of a transverse beam end and a floor panel edge is approximately 100 mm, which is a common dimension for conventional pen floors. In this construction, the thickness of the floor panels is preferably approximately 50 mm.

To facilitate the lifting and carrying ofthe floor panels, the maximum weight of a floor panel is preferably 50 kg. In order to produce even lighter floor panels, which are nevertheless sufficiently strong and suitable for use in corrosive environments, sufficiently anticorrosive reinforcement is preferably used.

In an effort to make the transverse beams more manageable, another embodiment is characterized in that the midsection of the transverse beam is narrower than the two ends of the transverse beam. Therefore, the transverse beams are lighter and easier to carry. This does not affect the strength of the transverse beams to any great extent, as the thickness, which determines the strength to a considerable extent, and the heavily loaded ends remain unchanged.

The aforementioned structural modifications, which increase the strength of the floor structure, also make it possible to increase the ratio of the surface of the manure slots in the floor panels to the surface of the solid sections of the floor panels, in relation to that of the conventional slotted concrete floors that comply with the applicable concrete standards. This ratio largely determines the undesired evaporation of manure that is left behind on the floor panels. A high ratio entails less evaporation and ammonia forming, which is beneficial to the environment. In this respect, another embodiment of the pen floor according to the invention is characterized in that the floor panels contain manure slots, whereby, on the upper surface of the floor panels, the ratio of the surface of the manure slots in the floor panels to the surface of the solid sections of the floor panels is greater than The upper surface refers to the surface which, after installation of the floor panels in a pen, is at the top and forms that part of the pen floor on which the animals can walk. The manure slots should preferably be longitudinal and tapered from the base to the surface of the floor panel, with a surface width of approximately 17 or 20 mm. In the event that the surface width of the slots is 20 mm, it is even possible to increase the aforementioned ratio to one of 0.4, which is even more beneficial to the environment.

### Brief description of the drawings

The invention is elucidated on the basis of drawings of an embodiment of the pen floor according to the invention, in which
Figure 1 is an interior view of a pen fitted with a pen floor according to the invention;
Figure 2 is a top view of a floor panel of the pen floor;
Figure 3 is a longitudinal section of the floor panel;
Figure 4 is a cross section of the floor panel;
Figure 5 is a top view of a transverse beam of the pen floor;
Figure 6 is a side view of the transverse beam; and
Figure 7 is a front view of the transverse beam.

### Detailed description of the drawings

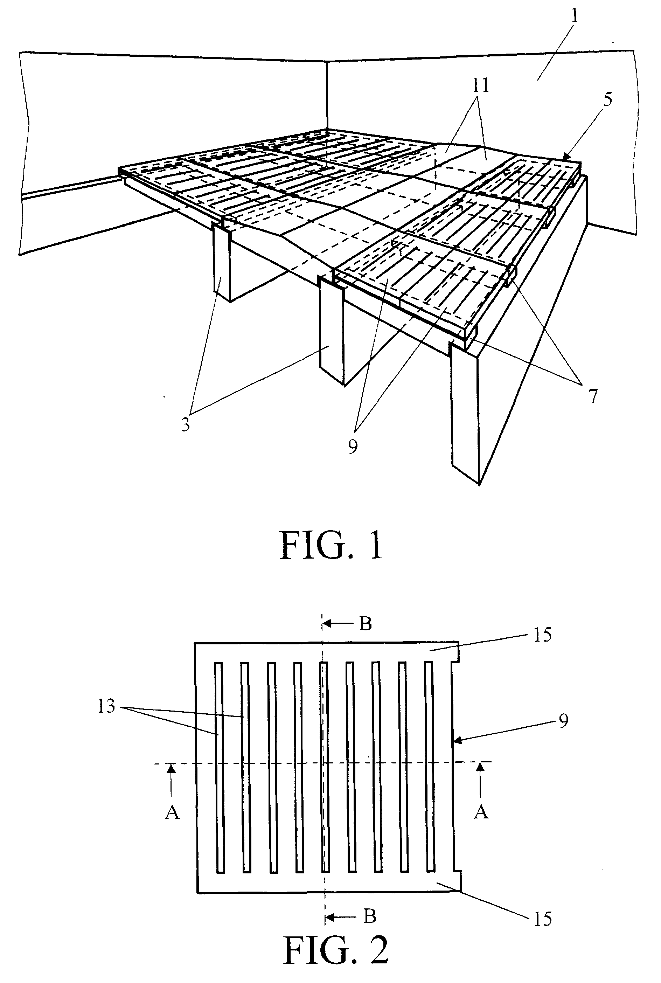

Figure 1 shows the interior of a livestock pen (1), for keeping pigs for example. The pen (1) contains supports formed by the cellar walls (3). The pen floor (5) rests upon the cellar walls. The pen floor (5) comprises transverse beams (7) which rest upon the cellar walls (3), and (gravel) concrete floor panels (9) whose edges rest upon the transverse beams. The middle of the pen floor (5) is constructed from known floor panels (11). The composite thickness of a transverse beam end (7) and a floor panel (9) according to the invention is equal to the thickness of an end of a known floor panel (11). Known pen floors contain floor panels which have approximately the same dimensions as these floor panels (11). In the case of the pen floor according to the invention, the floor panels (9) are substantially smaller and thinner, thanks to the use of the transverse beams (7). The weight of the floor panels (9) is preferably no more than 50 kg, so that these can be easily carried by one or two people.

Figure 2 shows a top view of a floor panel (9). The floor panel (9) contains longitudinal slots (13), through which the manure is transferred to the cellar. The edges (15) of the floor panel (9) rest upon the transverse beams.

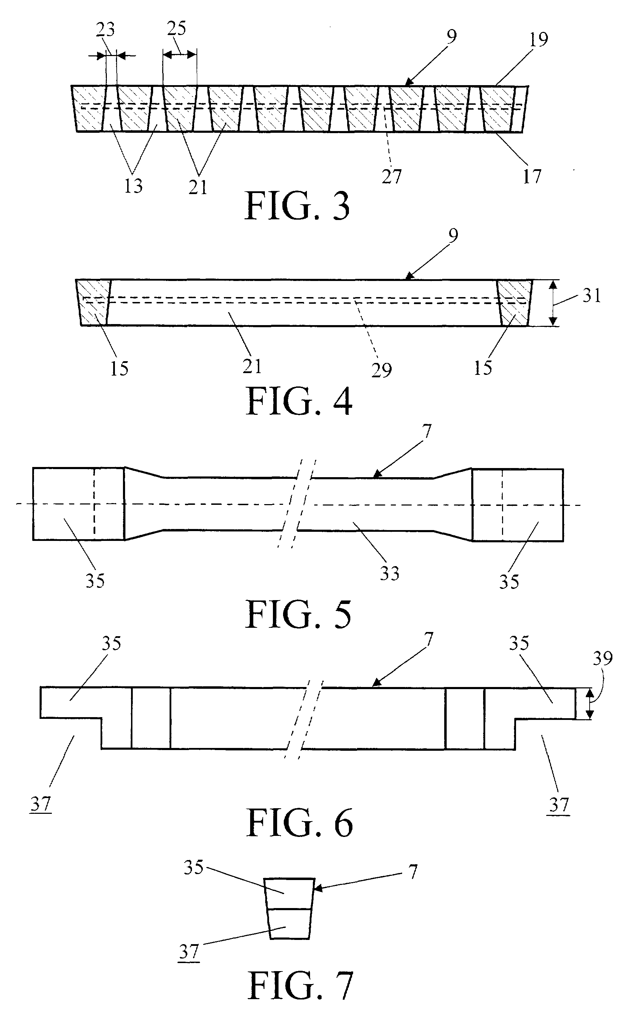

Figure 3 shows a longitudinal section of the floor panel (9), along line A-A as indicated in Figure 2. The slots (13) are tapered from the base (17) to the surface (19) of the floor panel. The solid sections (21) of the floor panel between the slots (13) are tapered in the opposite direction. The widths of the slots (13) and the solid sections (21) on the surface (19) of the floor panel are (23) and (25) respectively. The ratio of the surface of the slots (13) to the surface of the solid sections (sections (21) and edges (15) of the floor panel) on the upper surface (19) of the floor panel, is determinative for the evaporation of manure lying on the pen floor and should preferably be greater than 0.3, or ideally 0.4. The widths (23) of the slots (13) should preferably be 17 and 20 mm respectively. The corresponding widths (25) of the solid sections (21) between the slots are 43 and 40 mm respectively. The floor panel (9) is further strengthened by means of anticorrosive reinforcement (27), e.g. zinc-plated steel rods.

Figure 4 shows a cross section along line B-B, as indicated in Figure 2, of the floor panel (9). The solid sections (21) between the slots are also strengthened by means of reinforcement (29), which extends into the edges (15). The thickness (31) of the floor panel should preferably be 50 mm, to ensure that the composite thickness with the end of the transverse beam (see Figure 6) is equal to that of widely used known floor panels.

Figure 5 shows a top view of a transverse beam (7). Section (33), between the ends (35) of the transverse beam, is narrower than the ends (35) of the transverse beam, to make the transverse beam lighter.

Figure 6 shows a side view of the transverse beam (7). The ends (35) of the transverse beam (7) contain recesses (37), which run along the entire width. After installation of the transverse beam (7) on the cellar walls, the recesses (37) on the transverse beam (7) are located on the cellar walls (see Figure 1). The thickness (39) of the ends (35) is preferably 50 mm, which together with the thickness of a floor panel is equal to that of conventional floor panels, which should prove beneficial when replacing a conventional pen floor with one according to the invention.

Figure 7 shows a front view of the transverse beam (7), from which it is evident that the transverse beam tapers towards the base.

Although drawings have been used to explain the invention, it should be noted that the invention is by no means confined to the embodiment displayed in these drawings. The invention applies to any embodiment defined under the heading 'Claims', even though this differs from the embodiment indicated in the drawings. For instance, the transverse beams may have a uniform width over their entire length, and the slots in the floor panels may have a different shape to that indicated. Other types of reinforcement, or no reinforcement whatsoever, may also be applied. It is also possible to use other types of concrete, preferably types that are comparable to gravel concrete. Furthermore, the conventional floor panels indicated may also be replaced with the floor structure according to the invention.

## Claims

1. Pen floor for livestock pens, for pigsties in particular, comprising transverse beams (7) which, following installation of the pen floor (5) in a pen (1), rest upon supports (3) interspaced throughout the pen and bridge the space between one support and the next, whereby the pen floor (5) also comprises floor panels (9) whose edges (15) rest upon the transverse beams (7), **characterized in that** the ends (35) of the transverse beams (7) contain recesses (37), which run along the entire width, whereby, following installation of the pen floor (5) in a pen (1), the transverse beams (7) at the location of the recesses (37) rest upon supports (3).

2. Pen floor according to claim 1. **characterized in that** the floor panels (9) are manufactured from gravel or synthetic-resin concrete.

3. Pen floor according to claim 1 or 2, **characterized in that** the composite thickness (31 + 39) of a transverse beam end (35) and a floor panel edge (15) is approximately equal to the thickness of conventional pen floors.

4. Pen floor according to claim 3, **characterized in that** the composite thickness (31 + 39) of a transverse beam end (35) and a floor panel edge (15) is approximately 100 mm.

5. Pen floor according to one of the preceding claims, **characterized in that** the thickness (31) of the floor panels (9) is approximately 50 mm.

6. Pen floor according to one of the preceding claims, **characterized in that** the weight of a floor panel (9) is 50 kg max.

7. Pen floor according to one of the preceding claims, **characterized in that** the floor panels (9) are fitted with sufficiently anticorrosive reinforcement (27, 29).

8. Pen floor according to one of the preceding claims, **characterized in that** midsection (33) of a transverse beam (7) is narrower than its two ends (35).

9. Pen floor according to one of the preceding claims, **characterized in that** the floor panels (9) contain manure slots (13), whereby, on the upper surface (19) of the floor panels (9), the ratio of the surface of the manure slots (13) in the floor panels (9) to the surface of the solid sections of the floor panels (9) is greater than 0.3.

10. Pen floor according to claim 9, **characterized in that** the manure slots (13) in the floor panels (9) are longitudinal in shape, taper from the base (17) to the surface (19) of the panel, and have a surface width (23) of approximately 17 or 20 mm.

## Patentansprüche

1. Stallboden für landwirtschaftliche Ställe, insbesondere für Schweineställe, bestehend aus Querträgern, die nach der Anbringung des Stallbodens in einem Stall auf Auflagen, die in einem Stall im Abstand zueinander angeordnet sind, ruhen, den Abstand zwischen zwei benachbarten Auflagen überbrücken und im Abstand zueinander angeordnet sind, welcher Stallboden auch besteht aus Bodenplatten, die mit ihren Kanten auf den Querträgem ruhen, **dadurch gekennzeichnet, dass** die Querträger an ihren äußeren Enden mit Aussparungen versehen sind, die über die gesamte Breite verlaufen, wobei die Querträger, nach der Anbringung des Stallbodens in einem Stall, im Bereich der Aussparungen auf Auflagen ruhen.

2. Stallboden nach Anspruch 1, **dadurch gekennzeichnet, dass** die Bodenplatten aus Kiesbeton oder Polymerbeton bestehen.

3. Stallboden nach Anspruch 1 oder 2, **dadurch gekennzeichnet, dass** die Dicke eines Querträgers an dessen äußerem Ende und die Dicke einer Bodenplatte im Bereich der seitlichen Kante genau oder nahezu der Dicke handelsüblicher Stallböden entsprechen.

4. Stallboden nach Anspruch 3, **dadurch gekennzeichnet, dass** die Dicke eines Querträgers an dessen äußerem Ende und die Dicke einer Bodenplatte im Bereich der seitlichen Kante zusammen genau oder nahezu 100 Millimeter betragen.

5. Stallboden nach einem der oben genannten Ansprüche, **dadurch gekennzeichnet, dass** die Bodenplatten eine Dicke von genau oder nahezu 50 Millimetern aufweisen.

6. Stallboden nach einem der oben genannten Ansprüche, **dadurch gekennzeichnet, dass** das Gewicht einer Bodenplatte höchstens 50 Kilogramm beträgt.

7. Stallboden nach einem der oben genannten Ansprüche, **dadurch gekennzeichnet, dass** die Bodenplatten mit einer hinreichend korrosionsbeständigen Bewehrung ausgerührt sind.

8. Stallboden nach einem der oben genannten Ansprüche, **dadurch gekennzeichnet, dass** der zwischen den äußeren Enden eines Querträgers befindliche Bereich schmaler ist als die äußeren Enden des Querträgers.

9. Stallboden nach einem der oben genannten Ansprüche, **dadurch gekennzeichnet, dass** die Bodenplatten mit Öffnungen für die Ableitung von Mist versehen sind, wobei das Verhältnis zwischen der Fläche der Öffnungen, die sich auf der Oberseite der Bodenplatten befinden, und der Fläche der geschlossenen Bereiche der Bodenplatten größer als 0,3 ist.

10. Stallboden nach Anspruch 9, **dadurch gekennzeichnet, dass** die Öffnungen in den Bodenplatten länglich ausgebildet sind und sich von der Unterseite der Bodenplatte zu deren Oberseite hin verjüngen und auf der Oberseite eine Breite von genau oder nahezu 17 oder 20 Millimetern aufweisen.

## Revendications

1. Sol d'étable pour bâtiments ruraux, en particulier les porcheries, comprenant des traverses qui, après l'installation du sol dans une étable, reposent sur des appuis placés dans l'étable à une certaine distance les uns des autres, qui ont une longueur permettant de relier deux appuis voisins placés à une certaine distance l'un de l'autre, lequel sol d'étable comprend en outre des dalles dont les côtés latéraux reposent sur les traverses, **caractérisé en ce que** les extrémités des traverses sont pourvues sur toute leur largeur d'encoches, les traverses reposant à l'emplacement des encoches sur des appuis après le montage du sol dans une étable.

2. Sol d'étable selon la revendication 1, **caractérisé en ce que** les dalles sont en béton de gravillon ou en béton synthétique.

3. Sol d'étable selon la revendication 1 ou 2, **caractérisé en ce que** l'épaisseur de l'extrémité d'une traverse et l'épaisseur du côté latéral d'une dalle ont ensemble une épaisseur approximativement égale à celle de sols d'étable usuels.

4. Sol d'étable selon la revendication 3, **caractérisé en ce que** l'épaisseur de l'extrémité d'une traverse et l'épaisseur du côté latéral d'une dalle ont ensemble une épaisseur d'approximativement 100 mm.

5. Sol d'étable selon l'une des revendications qui précèdent, **caractérisé en ce que** les dalles ont approximativement 50 mm d'épaisseur.

6. Sol d'étable selon l'une des revendications qui précèdent, **caractérisé en ce que** le poids d'une dalle est de 50 kg au maximum.

7. Sol d'étable selon l'une des revendications qui précèdent, **caractérisé en ce que** les dalles sont pourvues d'une armature résistant suffisamment à la corrosion.

8. Sol d'étable selon l'une des revendications qui précèdent, **caractérisé en ce que** la partie située entre les extrémités d'une traverse est plus étroite que les extrémités de la traverse.

9. Sol d'étable selon l'une des revendications qui précèdent, **caractérisé en ce que** les dalles sont pourvues d'orifices à purin, le rapport entre la surface des orifices à purin à la partie supérieure des dalles et la surface des parties compactes des dalles étant supérieur à 0,3.

10. Sol d'étable selon la revendication 9, **caractérisé en ce que** les orifices dans les dalles sont oblongs, qu'ils ont une forme conique de la partie inférieure à la partie supérieure de la dalle et qu'ils ont approximativement 17 ou 20 mm de largeur à la partie supérieure de la dalle.
